# EUROPÄISCHE PATENTSCHRIFT

(11) **EP 2 949 466 B1**
(45) Veröffentlichungstag und Bekanntmachung des Hinweises auf die Patenterteilung: **20.02.2019**
(21) Anmeldenummer: 15001534.5
(22) Anmeldetag: 21.05.2015
(51) Int. Cl.: B32B 27/08, B65D 65/42, B32B 27/32

(54) **VERPACKUNGSFOLIE UND VERFAHREN ZU DEREN HERSTELLUNG**
PACKAGING FILM AND METHOD OF PRODUCING SAME
FILM D'EMBALLAGE ET SON PROCÉDÉ DE FABRICATION

(30) Priorität: 30.05.2014 DE 202014004393 U
(43) Veröffentlichungstag der Anmeldung: 02.12.2015
(73) Patentinhaber: Bischof + Klein SE & Co. KG, 49525 Lengerich (DE)
(72) Erfinder: WIEGAND, Uwe, 48477 Hörstel (DE); HEERMANN, Frank, 49504 Lotte (DE)
(74) Vertreter: Wischmeyer, André

(56) Entgegenhaltungen:
- WO-A2-2009/087659
- DE-A1- 4 415 426
- JP-A- 2001 316 489
- US-A1- 2002 182 435
- US-A1- 2004 185 230
- US-A1- 2006 046 006

## Beschreibung

Die Erfindung betrifft eine Verpackungsfolie nach dem Oberbegriff des Anspruchs 1 sowie ein Verfahren zu deren Herstellung nach dem Oberbegriff des Anspruchs 7.

Mehrschichtige Verpackungsfolien mit Schichten aus unterschiedlichen Kunststoffmaterialien, ggf. auch mit Metallschichten, werden insbesondere unter den Gesichtspunkten der Feuchtigkeits-, Dampf-, Gas- und Aromadichtigkeit und/oder unter dem Gesichtspunkt der mechanischen Festigkeit konzipiert. Eine allgemeine Entwicklung geht unter dem Gesichtspunkt der Materialeinsparung und der Abfallreduzierung dahin, zunehmend dünnere und festere Folien zur Bildung der Schichten zu verwenden, wobei die Festigkeit der Einzelschichten wie auch der gesamten Verpackungsfolie durch ein- oder mehrachsiges Strecken der miteinander verbundenen Schicht-Folien zu erzielen ist. Auch in Bezug auf eine etwa als Aroma-Barriereschicht vorgesehene Metallisierung gibt es eine Entwicklungstendenz zu möglichst dünnen eingebundenen Metallschichten, die ggf. nur noch als aufgedampfte Metallschichten mit Kunststofffolien als Träger einzubinden sind.

Aus der DE 32 43 272 A1 ist eine Verpackungsfolie aus Verbundmaterial nach dem Oberbegriff des Anspruchs 1 zu entnehmen, bei der mehrere Olefinpolymerfolien miteinander verbunden werden, wobei wenigstens eine von diesen eine orientierte Folie aus Polypropylen ist und wenigstens eine der Folien mit einem zur Abschirmung gegenüber Gasen und Dämpfen dienenden Lack beschichtet und metallisiert wird.

Der Rückgriff auf ein Polypropylenmaterial führt im Bereich der Polyolefine zu hohen Festigkeitswerten, die durch eine Orientierung mit ein- oder mehrachsigem Strecken noch erheblich erhöht wird. Dies eröffnet im Gegenzug bei vorgegebener Reißfestigkeit die Möglichkeit, die Polyolefinschichten in der Dicke zu reduzieren und damit an Material für die Fertigung wie auch für die Entsorgung zu sparen.

Nachteilig hat sich allerdings eine Überlastungsempfindlichkeit bzw. geringe Dehnbarkeit bei den gestreckten Polyolefinen gezeigt, die insbesondere bei akzentuierter Beanspruchung zutage tritt, wenn etwa eine Verpackung aus einer solchen Verpackungsfolie mitsamt Inhalt beim Sturz auf Stoß belastet wird oder auf dem Transportweg Verformungen ausgesetzt ist. Die orientierte Folie ist wenig verformbar und erleidet gegebenenfalls verformungsbedingte Beschädigungen, die zu Rissen mit einer Fortpflanzungstendenz führen können und/oder die Barrierewirkung einer innenliegenden Metallisierung reduzieren. Folgeschäden für mit der Verpackungsfolie zu schützende Produkte sind oft schwer erkennbar.

Überdies erfordert die übliche Verarbeitung einer Polypropylenfolie mit Heißsiegelvorgängen eine gegenüber der Verarbeitung von Polyäthylen höhere Temperaturführung, während andererseits die nach dem genannten Stand der Technik auch in Betracht gezogene Kombination unterschiedlicher Polyolefinmaterialien der unter Entsorgungsgesichtspunkten geforderten Einheitlichkeit des Materials zuwiderläuft.

Insofern sind beispielsweise Verbundfolien mit einem Verbund von Polypropylen- und Polyethylenschichten für das sortenreine Recycling problematisch.

Im gleichen Sinne problematisch sind Metallisierungen jedenfalls dann, wenn sie nicht extrem dünn aufgebracht werden. Für ein recycelfähiges Material kommen im Rahmen der (unterschiedlichen) Reinheitsvorschriften nur Metallisierungen in einer minimalen, noch durchscheinenden Stärke in Betracht, die aber jeweils unter dem Aspekt einer Überlastung orientierter Polypropylenfolien zusammen mit den Polypropylenfolien beschädigungsanfällig sind.

Aus der WO 2009/087659 A2 ist weiterhin eine mehrschichtige Verpackungsfolie für Behälter, Tuben u.dgl. zur Verpackung und Ausgabe von Pasten, Gels und cremigen Produkten mit Schichten aus verschiedenen Kunststoffen bekannt. Die Mehrschichtfolie weist eine innenliegende Metallisierungsschicht auf einer plasmabehandelten Folienschicht auf, um insbesondere hinter durchsichtigen Außenschichten Glanzeffekte zu erzielen.

Aufgabe der Erfindung ist es demgegenüber, eine recyclingfähige Verpackungsfolie aus mehreren Polyolefinschichten zu schaffen, die möglichst einfach, insbesondere auch mit geläufigen maschinellen Heißsiegelverfahren zu verarbeiten ist, gute Barriereeigenschaften einzuarbeiten erlaubt, dabei aber die Barrieresicherheit auch gegenüber Stoßbelastungen und dergleichen sicherstellt und die bei der Entsorgung ein recycelfähiges Material darstellt. Aufgabe der Erfindung ist es weiterhin, ein Verfahren zur Herstellung einer solchen Verpackungsfolie anzubieten.

Gemäß der Erfindung wird diese Aufgabe von einer recyclingfähigen Verpackungsfolie nach dem Oberbegriff des Anspruchs 1 ausgehend mit den kennzeichnenden Merkmalen des Anspruchs 1 gelöst. Weiterhin wird die Aufgabe verfahrensmäßig mit einem von dem Oberbegriff des Anspruchs 7 ausgehenden Verfahren durch die kennzeichnenden Merkmale des Anspruchs 7 gelöst.

Die Verwendung unverstreckter Polyethylen-Schichten beidseits der Lackschicht mit der darauf aufgedampften Metallisierung schafft eine Verpackungsfolie größerer Nachgiebigkeit und Verformbarkeit, die die Gefahr einer Bruchdehnung bei Überlastung, insbesondere bei einem Absturz eines verpackten Produktes, weitgehend reduziert. Dementsprechend wird auch die Gefahr reduziert, dass die Metallisierung zerreißt oder zerbricht. Auch die Lackschicht, die wie schon in der vorgenannten DE 32 43 272 A1 ausgeführt, seitens des Fachmanns unter einer Vielzahl bekanntermaßen geeigneter Materialien ausgewählt werden kann, ist mit der entsprechenden Bruch- und Risssicherheit in der Polyäthylen-Trägerschicht entsprechend abgesi-(weiter mit S. 4 der bisherigen Beschreibung) chert. Die Lackschicht kann dabei auch unter dem Gesichtspunkt einer Barrierefunktion für den jeweiligen Einsatz der Verpackungsfolie ausgewählt sein. Gegenüber dem vorgenannten Stand der Technik ist die Auswahl aber insbesondere darauf zu richten, dass die Lackschicht eine Oberfläche geringer Rauhigkeit ausbildet, auf der auch eine Metallisierung geringer Dicke noch eine gute Barrierefunktion bietet.

Bei der unter dem Gesichtspunkt der für ein Recyceln zu fordernden Materialreinheit und den durchgehenden Rückgriff auf Polyethylen ist die - im mikroskopischen Bereich wahrzunehmende - hohe Oberflächenrauhigkeit des Polyethylens ein Hindernis für eine dünne aber barrierewirksame Metallisierung. Insofern kommt es darauf an, die Lacksicht zur Glättung der Oberfläche vorzusehen. Die Lackschicht kann mit herkömmlichen Mitteln sehr dünn aufgetragen werden, so dass sie im Wesentlichen nur die Vertiefungen der Polyethylen-Oberfläche darunter auffüllt. Dies gilt jedenfalls dann, wenn der Lackschicht nicht noch ergänzende Barrierefunktionen neben der Metallisierung zuzuweisen sind. Die zu erzielende geringe Rauhigkeit der Oberfläche kann sowohl durch das Auftragsverfahren für die Lackschicht wie auch durch Materialeigenschaften der Lackschicht, die die Bildung eines glatten Oberflächenfilms fördern, mit bekannten Mitteln erzielt werden. In der Praxis lässt sich eine Lackoberfläche erzielen, die weniger als die Hälfte der Oberfläche der darunterliegenden Polyethylenschicht ausbildet. Dementsprechend ist auch eine äußerst dünn aufgetragene Metallisierung als ebenmäßige Barriere aufzubringen, während eine Metallisierung der Polyethylenoberfläche selbst aufgrund der Zerklüftung im mikroskopischen Bereich je nach dem Verfahren der Aufbringung der Metallisierung zu verfahrenstypischen Anhäufungen und Abschwächungen bzw. Lücken führt.

Die den in Betracht kommenden flexiblen Lacken regelmäßig von Haus aus mitgegebene Eigenschaft zur Filmbildung, zum Ausgleich von Oberflächenrauhigkeiten des Untergrundes und zur Ausbildung einer glatten Oberfläche sind für die dünne Metallisierung zu nutzen. Regelmäßig vorteilhaft für den auszuwählenden Lack ist ein geringes thermisches und/oder chemisches Schrumpfungsverhalten, etwa bei kalt zu verarbeitenden oder lösungsmittelarmen Lacken. Hinsichtlich der Verbindung des Lacks mit der Oberfläche der Polyethylenschichten gilt Polyäthylen allgemein als problematisch. Im vorliegenden Fall sind die Haftungsanforderungen keineswegs hoch. Vielmehr ist es vorteilhaft, wenn sich der Verbund der Schichten der Verpackungsfolie im falle hoher Verformung auflösen kann und damit die Nachgiebigkeit der Schichten gegenüber der meist einseitigren Belastung nutzt. Insofern ist die Auswahl des Lacks nicht auf ein festes Anhaften an den Polyethylenschichten ausgerichtet und bezieht auch Lackmaterialien anderer Art, insbesondere auch Lacke mit hohem Pigmentanteil ein.

Eine als Barriere wirksame, wenngleich weniger als 1.000 Å, vorzugsweise im Mittel nur etwa 300 Å dicke und noch durchscheinende Metallisierung ist auf die Lackschicht gleichmäßig aufzutragen, ohne dass diese Metallisierung einer Wiederverwertbarkeit des Materials beim Recycling entgegensteht.

Die Sortenreinheit der Verpackungsfolie wird auch mit einer Laminierung mit Polyethylen aufrechterhalten, indem eine dünne, dünnflüssig heiß zwischen die metallisierte Oberfläche der Lackschicht und eine weitere Polyethylenschicht eingebrachte Polyethylen-Schmelze, beispielsweise mit Hilfe einer Extrusionslaminierung, einen Gesamtverbund herstellt. Die Polyethylen-Deckfolie kann vor dem Auflaminieren mit einer Konturbedruckung ausgestattet sein, die dann eine innenliegende - kratzfest und abriebfest eingelagerte - Bedruckung ergibt.

Die Metallisierung kann je nach den Barriereanforderungen, aus unterschiedlichen Materialien bestehen. In der Praxis hat sich eine Metallisierung durchgesetzt, die im Wesentlichen aus Aluminium, Aluminiumoxid oder Siliziumoxid besteht und im vorliegenden Fall bevorzugt wird. Diese Metallisierung kann in Form einer Bedampfung dosiert dünn und dennoch gleichmäßig aufgebracht werden.

Ein zweckmäßig gestaltetes Verfahren gemäß der Erfindung, die vorbetrachtete Verpackungsfolie herzustellen, sieht die Verwendung von unverstreckten Polyethylenfolien für die Polyolefinschichten vor, von denen eine Polyethylenfolie mit einer dünnen, die Oberflächenrauhigkeit der Polyethylenschicht glättenden Lackschicht überzogen und danach auf der Lackschicht metallisiert wird, bevor diese lackgeglättete und metallisierte Polyethylenfolie mit einer weiteren Polyethylenfolie mithilfe einer dazwischen dünnflüssig heiß eingebrachten Polyethylenschmelze laminiert wird.

Zur Sicherung der vorgegebenen Barrierefunktion der Verpackungsfolie gegenüber hohen Beanspruchungen, insbesondere bei Absturz, ist die Verwendung unverstreckter Folie wesentlich, wozu vorzugsweise unverstreckte Blasfolien herangezogen werden. Diese können dann in erprobter Weise mittels einer Extrusionslaminierung zusammengebracht werden, wobei eine Polyethylenschmelze heiß dünnflüssig zwischen zwei Folien eingebracht werden kann, wenn die Zusammenführung zwischen nebeneinander liegenden Walzen nach unten erfolgt und die Stärke der Schmelzschicht mit der Abzugsgeschwindigkeit der so erstellten Verbundfolie eingestellt werden kann.

Ausführungsbeispiele der Erfindung sind der Zeichnung darstellt und werden nachfolgend näher beschrieben. In der Zeichnung zeigen in jeweils stark schematisierter und vereinfachter Form:
- Fig. 1: einen Querschnitt durch eine Verpackungsfolie gemäß der Erfindung,
- Fig. 2: einen Querschnitt durch eine mit zusätzlicher Konterbedruckung versehene Verpackungsfolie gemäß der Erfindung und
- Fig. 3: eine Darstellung des Laminiervorgangs für die Verpackungsfolie.

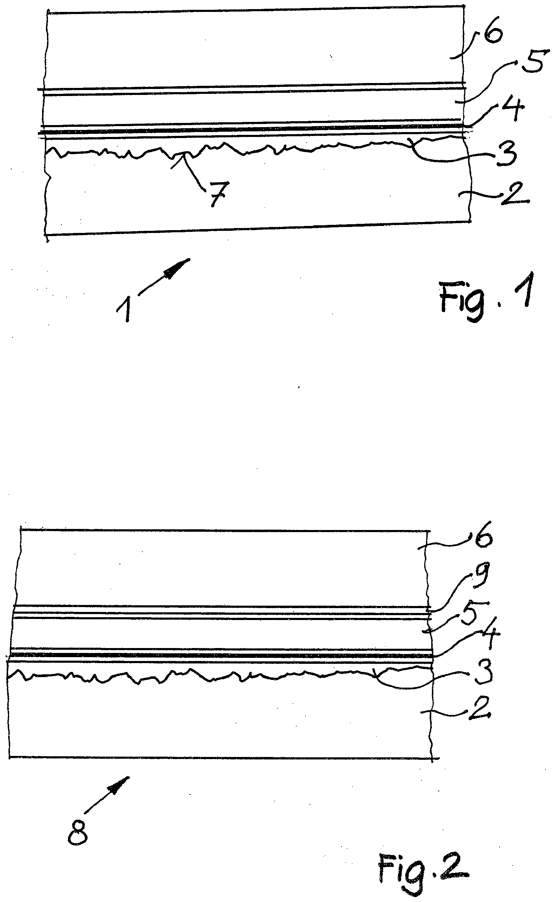

Die in Fig. 1 im Querschnitt skizzierte, insgesamt mit 1 bezeichnete Verpackungsfolie ist aus fünf Schichten aufgebaut, nämlich einer in der Darstellung untenliegenden Polyethylenschicht 2 aus einem unverstreckten, nicht also ein- oder zweiachsig orientiertem Polyethylenmaterial, eine ausgleichende Schicht 3 aus einem aufgetragenen Lack, einer Barriereschicht 4 aus aufgedampftem Aluminium, einer Schmelzschicht 5 aus einem Polyethylen, mit der eine Schicht 6 aus Polyethylen aufgebracht ist. Aufgrund der geringen Adhäsionskräfte zwischen den einzelnen Schichten spricht der Fachmann von einem schwimmenden Verbund.

Die teilweise zwischen den Schichten gezeichneten Zwischenräume sind nur zur zeichnerischen Verdeutlichung gedacht. Tatsächlich sind die Schichten insgesamt flächig zu einer Verpackungsfolie miteinander verbunden.

Gleichfalls zur Verdeutlichung ist die Deckschicht 2 oberseitig mit einer unregelmäßigen Kontur gezeichnet, um - aus Darstellungsgründen vergrößert - die Oberflächenrauhigkeit der Decksicht 2 anzudeuten. Es versteht sich, dass eine solche Oberflächenrauhigkeit auch der gegenüberliegenden Seite der Deckschicht 2 wie auch beiden Seiten der Deckschicht 6 zuzuschreiben ist, auf die es allerdings im Folgenden nicht ankommt.

Für die Metallisierung 4 ist allerdings eine glatte, also mit sehr geringer Oberflächenrauhigkeit versehene Metallisierungsbasis wichtig. Diese geringe Oberflächenrauhigkeit wird durch eine glättende Lackschicht 3 erzielt. Ein Lack mit guter Filmbildung und guten Ausgleichseigenschaften, der auch beim Trocknen wenig schrumpft und nach dem Trocknen seine glatte Oberfläche beibehält, haftet auf der Deckschicht 2 in einem für die Herstellung der Folie im Verbund und auch für die Weiterverarbeitung der Verpackungsfolie zu Beuteln, Säcken oder dergleichen ausreichendem Maß. Die Haftung setzt keinen hochbelastbaren oder innigen Materialverbund voraus. Vielmehr ist bei dieser Art Verpackungsfolien durchaus eine Auflösung des Schichtenverbundes zu nutzen, um Überlastungen der Verpackungsfolie beim Absturz einer Verpackung oder bei punktueller Beanspruchung nachgiebig aufzufangen. Die entscheidende Funktion der Lacksicht 3 besteht in der Ausbildung eines ebenmäßig glatten Untergrundes für die Metallisierung 4, die damit auf eine kleinere Oberfläche aufzubringen ist, die nur noch etwa die Hälfte der mit Aufrauhungen versehenen Oberfläche 7 ausmacht und dementsprechend bei vorgegebener Metallisierungsdicke einen entsprechend verringerten Materialauftrag ermöglicht. Damit sind besser im Allgemeinen sehr eng gefasste Grenzen für Metall-Beimischungen zu einem wiederverwertbaren, ansonsten sortenreinen Kunststoffmaterial einzuhalten und eine für die Barrierefunktion wesentliche Geschlossenheit und Gleichmäßigkeit bei minimierter Metallisierungsdicke noch einzuhalten.

Die Decksicht 2 mitsamt Lackschicht 3 und Metallisierung 4 ist zu einem Vorprodukt in Folienform vorgefertigt, ehe sie mit der Polyethylen-Deckschicht 6 durch eine Schmelzschicht 5 verbunden wird, die gleichfalls aus einem Polyethylen besteht und zu einer Verbindung der Schichten im Sinne einer ganzheitlich zu handhabenden Verpackungsfolie zwischen die Schichten eingebracht wird.

Die Ausführungsform nach Fig. 2 unterscheidet sich von der vorstehend betrachteten Ausführungsform lediglich darin, dass die dort insgesamt mit 8 bezeichnete Verpackungsfolie innenseitig eine Bedruckungsschicht 9 aufweist, die vor dem Kaschieren auf die Seite der Deckschicht 6 aufgebracht worden ist, die als Innenseite mit der Schmelzschicht 5 auf die Metallisierung 4 der Deckschicht 2 aufkaschiert wird. Die Bedruckungsschicht 9 liefert eine durch die Deckschicht 6 abrieb- und kratzfest geschützte Konterbedruckung.

Die ansonsten übereinstimmenden Schichten entsprechen denen der Fig. 1 und sind auch mit den übereinstimmenden Bezugszeichen versehen.

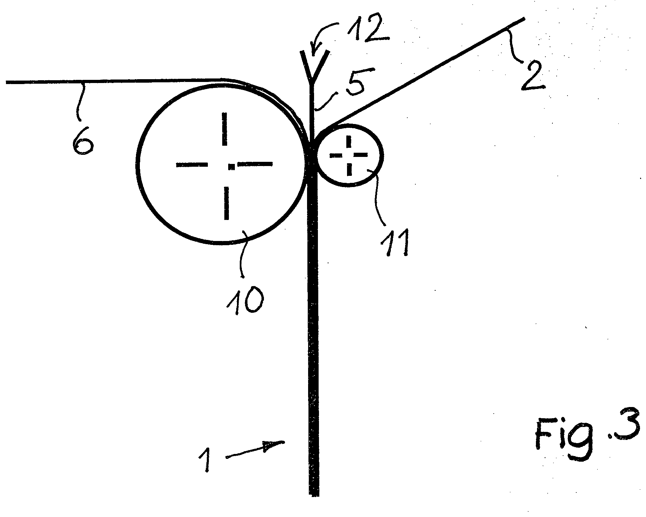

In Fig. 3 ist der Laminiervorgang dargestellt, bei dem zwischen zwei Walzen 10,11 die Schichten als Folien von oben her zusammengeführt und in laminierter Form als Verpackungsfolie 1 unterseitig abgeführt werden. Von einer Seite läuft dazu die Deckfolie 2, von der anderer Seite die Deckfolie 6 in einen Spalt zwischen den Kalandern 10,11 ein, wobei die Deckfolie 2 bereits mit der Lackschicht 3 und mit der Metallisierung 4 versehen ist, während die Deckfolie 6 ggf. auch schon die Bedruckung 9 aufweist. In den oberseitig offenen Spalt zwischen den Deckfolien 2,6 wird eine Laminierungsschmelze 12 über ein langgestrecktes) Mundstück dosiert oder überschüssig eingegeben, so dass die Deckschichten 2 und 6 von den Folien-Vorprodukten her in einen Schichtverbund zur Verpackungsfolie 1 übergehen. Die Abzugsgeschwindigkeit und die Spaltweite zwischen den Walzen 10,11 erlaubt eine Einstellung der Schmelzschicht 5 hinsichtlich der Dicke.

Die erzielte Verpackungsfolie 1 bzw. 8 ist in der Gesamtstärke für eine vorgegebene Normalbeanspruchung, etwa anhand des zu verpackenden Gewichtsinhalts, stärker ausgeführt als derzeit übliche Verpackungsfolien, die aus orientierten und durch Strecken verfestigten Teilfolien zusammengestellt sind. Im vorliegenden Beispiel ist die Ausgangsfolie für die Deckschicht 2 mit 40 bis 60 µm angesetzt, wobei die Lackschicht 3 zur Glättung der Innenseitigen Oberfläche und eine Metallisierung 4 in Form einer aufgedampften Aluminiumschicht in einer Stärke von 300 Å kaum Einfluss auf die Gesamtdicke hat. Die in Fig. 3 darauf aufzulaminierende Deckschicht 6 wird mit 60 µm angesetzt. Die Schmelzschicht 5 wird, wie auch in Fig. 1 und 2 zeichnerisch angedeutet, demgegenüber dünnschichtig gehalten mit einem Auftrag von etwa 25 g/m², was bei Polyethylen einer Schichtstärke von etwa 23 µm entspricht.

Die Schmelze 12 besteht aus einem dünnflüssig erhitzen Polyethylen, welches nach dem Laminiervorgang zwischen den Walzen 10,11 erstarrt. Dazu wird die Walze 10 auf eine Temperatur von beispielsweise 5°C gekühlt.

Die so erstellte Folie ist (im Wesentlichen) sortenrein auszuführen und insofern recycelbar, wobei insbesondere die notwendigerweise dünn zu haltende Metallisierung 4 auf eine geglättete Oberfläche aufzubringen ist. Die Verwendung unverstreckter Polyethylenfolien erzielt eine für besonders hohe Belastungsfälle wie den Absturz einer gefüllten Verpackung entscheidend wichtige Dehnbarkeit und Nachgiebigkeit, die auch dadurch verbessert werden kann, dass die Deckschichten nach der Laminierung nur einen begrenzten Zusammenhalt aufweisen und sich ggf. bei entsprechenden Beanspruchungen voneinander lösen und gegeneinander verschieben können.

## Patentansprüche

1. Verpackungsfolie (1,8) aus mehreren miteinander verbundenen Polyolefinschichten (2,6) sowie wenigstens einer innenliegenden, einerseits einer der Polyolefinschichten direkt anhaftenden, andererseits mit einer Metallisierung (4) versehenen Lackschicht (39), **dadurch gekennzeichnet, dass** die Polyolefinschichten (2,6) beidseits der metallisierten Lackschicht (3) aus unverstrecktem Polyethylen bestehen und dass die der einen der Polyolefinschichten direkt anhaftende Lackschicht (3) für die Metallisierung (4) eine Oberfläche geringer Rauhigkeit, die gegenüber der Oberfläche der direkt verbundenen Polyolefinschicht (2) mehr als halbiert ist, aufweist, wobei eine weitere Polyolefinschicht (6) mit der Oberfläche der Lackschicht (3) über eine Polyethylen-Schmelze (5) verbunden ist.

2. Verpackungsfolie nach Anspruch 1, **dadurch gekennzeichnet, dass** die Metallisierung (4) im Wesentlichen aus Aluminium, Aluminiumoxid oder Siliziumoxid besteht.

3. Verpackungsfolie nach Anspruch 2, **dadurch gekennzeichnet, dass** die Metallisierung (4) als Aluminium-, Aluminiumoyid- oder Siliziumschicht in einer Dicke von weniger als 1.000 Å (Angström) auf der Lackschicht (3) aufgebracht ist.

4. Verpackungsfolie nach Anspruch 3, **dadurch gekennzeichnet, dass** die Metallisierung (4) eine Dicke von etwa 300 Å aufweist.

5. Verpackungsfolie nach einem der Ansprüche 1 bis 4, **dadurch gekennzeichnet, dass** die Gesamtdicke der Schichten (2,3,4,5,6) über 100 µm beträgt.

6. Verpackungsfolie nach einem der Ansprüche 1 bis 5, **dadurch gekennzeichnet, dass** die auf die Lackschicht (3) auflaminierte Polyethylenfolie (6) eine innenliegende Konterbedruckung (9) aufweist.

7. Verfahren zur Herstellung einer Verpackungsfolie (1,8) nach einem der Ansprüche 1 bis 6, bei dem mehrere Polyolefinschichten (2,6) miteinander verbunden sind, nachdem eine der Polyolefinschichten (2) mit einer Lackschicht (3) versehen und auf der Lackschicht (3) mit einer Metallisierung (4) bedeckt ist, **dadurch gekennzeichnet, dass** als Polyolefinschichten (2,6) jeweils unverstreckte Polyethylenfolien verwendet werden, von denen eine mit einer dünnen, die Oberflächenrauhigkeit der Polyethylenschicht glättenden Lackschicht (3) überzogen und danach auf der Lackschicht (3) metallisiert wird, und von denen eine weitere Polyolefinfolie (6) mit einer Polyethylenkaschierung (5) auf die metallisierte Lackschicht (3) auflaminiert wird.

8. Verfahren nach Anspruch 7, **dadurch gekennzeichnet, dass** die Polyolefinschichten (2,6) aus unverstreckter Blasfolie bestehen.

9. Verfahren nach Anspruch 8, **dadurch gekennzeichnet, dass** die Laminierung der einzelnen Folien (2,6) mittels Polyethylen-Schmelze (12) erfolgt, die zwischen die einzelnen Folien (2,6) eingeführt wird.

## Claims

1. Packaging film (1, 8) consisting of a plurality of interconnected polyolefin layers (2, 6) and at least one inner lacquer layer (39) that directly adheres on one side to one of the polyolefin layers and is provided with a metallisation (4) on the other side, **characterised in that** the polyolefin layers (2, 6) consist of undrawn polyethylene on both sides of the metallised lacquer layer (3) and **in that** the lacquer layer (3) that directly adheres to one of the polyolefin layers for the metallisation (4) has a surface of low roughness that is more than halved with respect to the surface of the directly connected polyolefin layer (2), a further polyolefin layer (6) being connected to the surface of the lacquer layer (3) by means of a polyethylene melt (5).

2. Packaging film according to claim 1, **characterised in that** the metallisation (4) substantially consists of aluminium, aluminium oxide or silicon oxide.

3. Packaging film according to claim 2, **characterised in that** the metallisation (4) is applied to the lacquer layer (3) in a thickness of less than 1000 Å (ångström) as an aluminium, aluminium oxide or silicon layer.

4. Packaging film according to claim 3, **characterised in that** the metallisation (4) has a thickness of approximately 300 Å.

5. Packaging film according to any of claims 1 to 4, **characterised in that** the total thickness of the layers (2, 3, 4, 5, 6) is greater than 100 µm.

6. Packaging film according to any of claims 1 to 5, **characterised in that** the polyethylene film (6) laminated onto the lacquer layer (3) has an inner counter-print (9).

7. Method for producing a packaging film (1, 8) according to any of claims 1 to 6, in which a plurality of polyolefin layers (2, 6) are interconnected, after which one of the polyolefin layers (2) is provided with a lacquer layer (3) and covered with a metallisation (4) on the lacquer layer (3), **characterised in that** undrawn polyethylene films are used in each case as polyolefin layers (2, 6), one of which films is covered with a thin lacquer layer (3) that smooths the surface roughness of the polyethylene layer, and is then metallised on the lacquer layer (3), arid one further polyolefin film (6) of which is laminated with a polyethylene lamination (5) on the metallised lacquer layer (3).

8. Method according to claim 7, **characterised in that** the polyolefin layers (2, 6) consist of undrawn blown film.

9. Method according to claim 8, **characterised in that** the individual films (2, 6) are laminated by means of a polyethylene melt (12) which is introduced between the individual films (2, 6).

## Revendications

1. Film d'emballage (1, 8) composé de plusieurs couches de polyoléfine (2, 6) reliées entre elles, et d'au moins une couche de vernis (39) située à l'intérieur, adhérant directement à l'une des couches de polyoléfine d'une part, et munie d'une métallisation (4) d'autre part, **caractérisé en ce que** les couches de polyoléfine (2, 6) sont composées de polyéthylène non étiré des deux côtés de la couche de vernis métallisée (3), et **en ce que** la couche de vernis (3) adhérant directement à l'une des couches de polyoléfine présente en vue de la métallisation (4) une surface de faible rugosité diminuée de plus de la moitié par rapport à la surface de la couche de polyoléfine (2) reliée directement, une couche de polyoléfine (6) supplémentaire étant reliée à la surface de la couche de vernis (3) par l'intermédiaire d'une masse fondue de polyéthylène (5).

2. Film d'emballage selon la revendication 1, **caractérisé en ce que** la métallisation (4) se compose substantiellement d'aluminium, d'oxyde d'aluminium ou d'oxyde de silicium.

3. Film d'emballage selon la revendication 2, **caractérisé en ce que** la métallisation (4) est appliquée sur la couche de vernis (3) sous la forme d'une couche d'aluminium, d'oxyde d'aluminium ou de silicium avec une épaisseur de moins de 1000 Å (Angström).

4. Film d'emballage selon la revendication 3, **caractérisé en ce que** la métallisation (4) présente une épaisseur d'environ 300 Â.

5. Film d'emballage selon l'une quelconque des revendications 1 à 4, **caractérisé en ce que** l'épaisseur totale des couches (2, 3, 4, 5, 6) est de 100 µm.

6. Film d'emballage selon l'une quelconque des revendications 1 à 5, **caractérisé en ce que** le film de polyéthylène (6) stratifié sur la couche de vernis (3) présente une contre-impression (9) située à l'intérieur.

7. Procédé de fabrication d'un film d'emballage (1, 8) selon l'une quelconque des revendications 1 à 6, dans lequel plusieurs couches de polyoléfine (2, 6) sont reliées ensemble après que l'une des couches de polyoléfine (2) a été munie d'une couche de vernis (3) et recouverte d'une métallisation (4) sur la couche de vernis (3), **caractérisé en ce que** comme couches de polyoléfine (2, 6) des films de polyéthylène non étirés sont utilisés respectivement dont l'un est couvert d'une fine couche de vernis (3) lissant la rugosité de surface de la couche de polyéthylène et est ensuite métallisé sur la couche de vernis (3), et dont un autre film de polyoléfine (6) est stratifié sur la couche de vernis (3) métallisée.

8. Procédé selon la revendication 7, **caractérisé en ce que** les couches de polyoléfine (2, 6) sont composées d'une lamelle de soufflage non étirée.

9. Procédé selon la revendication 8, **caractérisé en ce que** la stratification des films individuels (2, 6) est effectuée au moyen d'une masse fondue de polyéthylène (12) introduite entre les films individuels (2, 6).
